(19) Europäisches Patentamt
European Patent Office
Office européen des brevets

(11) **EP 4 246 383 A1**

(12) **EUROPEAN PATENT APPLICATION**

(43) Date of publication:
**20.09.2023 Bulletin 2023/38**

(21) Application number: **22305306.7**

(22) Date of filing: **16.03.2022**

(51) International Patent Classification (IPC):
**G06N 10/20** (2022.01)   **G06N 10/70** (2022.01)

(52) Cooperative Patent Classification (CPC):
**G06N 10/20; G06N 10/70**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BULL SAS**
**78340 Les Clayes-sous-Bois (FR)**

(72) Inventors:
• **GAZDA, Arnaud**
**78000 VERSAILLES (FR)**
• **MARTIEL, Simon**
**78000 VERSAILLES (FR)**
• **OILLARBURU, Jon**
**64640 SAINT MARTIN D'ARBEROUE (FR)**

(74) Representative: **Plasseraud IP**
**66, rue de la Chaussée d'Antin**
**75440 Paris Cedex 09 (FR)**

(54) **COMPILATION TECHNIQUE FOR SURFACE CODE ARCHITECTURE**

(57) Method for implementing a graph (G) comprising a plurality of vertices (V) and links (E) between the vertices, a set (R) being a collection of subsets (Ri) of said a given number of vertices (Rik)comprising:
-in said set (R), selecting subsets (Ri, Rj), called pre-selected subsets, such that a tree (Ti, Tj) is associated respectively to said subset (Ri, Rj), said associated trees (Ti, Tj) being pairwise disjoint and constructing (301) each tree (Ti);
- associating a weight to each said tree (Ti);
- choosing the subset for which the tree (Ti) has the highest weight.

[Fig. 1]

FIG. 1

EP 4 246 383 A1

# Description

Quantum computing has been developing recently as it gives promising hopes to solve problems that are classically intractable.

One of the challenges that faces quantum computing is that it needs manipulating a large amount of qubits beyond their coherence time, thus requiring error corrections. In particular, to store and manipulate quantum information on large time scales, it is known to actively correct errors by combining physical qubits into logical qubits using a quantum error correcting code such as surface code architecture.

## Summary

This disclosure ensures an optimization of implementing of the quantum circuit for said surface code architecture. More generally, the present disclosure aims at reducing calculation time when implementing an algorithm.

It is proposed a method for implementing a graph (G) comprising a plurality of vertices (V) and links (E) between the vertices, a set (R) being a collection of subsets (Ri) of said a given number of vertices (Rik), the method comprising: in said set (R), selecting subsets (Ri, Rj), called pre-selected subsets, such that a tree (Ti, Tj) is associated respectively to said subset (Ri, Rj), said associated trees (Ti, Tj) being pairwise disjoint and constructing (301) each tree (Ti); associating a weight to each said tree (Ti); choosing the subset for which the tree (Ti) has the highest weight.

The claimed method ensures reducing calculation time.

According to another aspect, the graph is a tree.

According to another aspect, the method comprises constructing a graph, whose vertices are said trees, two vertices of said graph being connected only if they intersect.

According to another aspect, the method comprises finding a disconnected set of vertices with the largest possible weight.

According to another aspect, finding a disconnected set of vertices with the largest possible weight consists in finding a solution to maximal weighted independent set.

The invention is also about a method for implementing a quantum circuit comprising a plurality of qubits as well as operators executed on said qubits, said operators comprising a sequence of $\frac{\pi}{4}$ Pauli rotation gates, a surface code layout comprising an arrangement of said quantum circuit on a quantum chip, the arrangement comprising at least a tree with a plurality of subtrees, at each rotation gate corresponding a subtree of the tree, the method comprising:

- generating iteratively a directed acyclic graph of said quantum circuit, a front layer of the DAG being a set of rotations that can be effectively implemented at each iteration,
- selecting in said front layer of the DAG a subset, called selected subset, of said set of rotations among subsets, called non intersecting subsets, in which the subtrees are arranged not to intersect by applying the method of implementing a graph as already described.

According to another aspect, the method comprises stopping generating the DAG when the front layer is empty.

According to another aspect, the method comprises removing the selected subset of rotations from the DAG.

## Brief Description of Drawings

Other features, details and advantages will be shown in the following detailed description and on the figures, on which:

**Fig. 1**

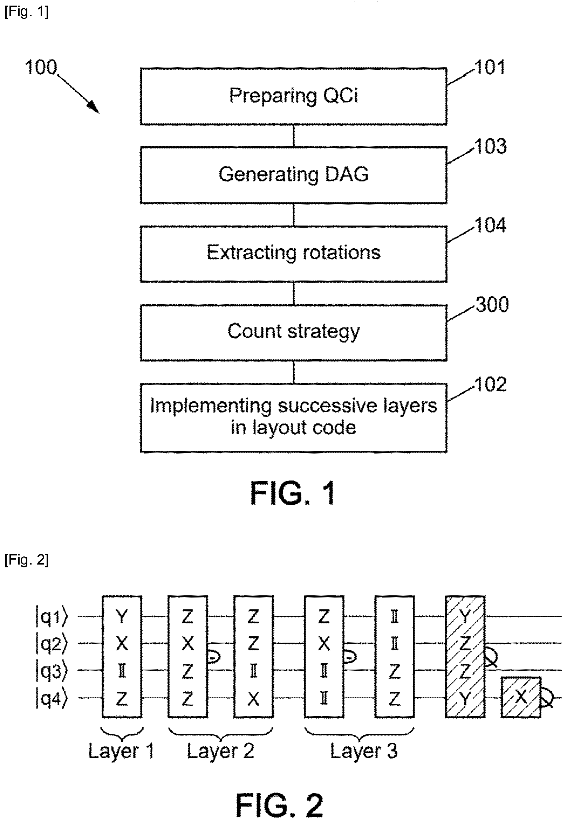

[Fig. 1] is a view of a flowchart of a method according to an embodiment.
**Fig. 2**
[Fig. 2] is a view of an example of a quantum circuit.
**Fig. 3**

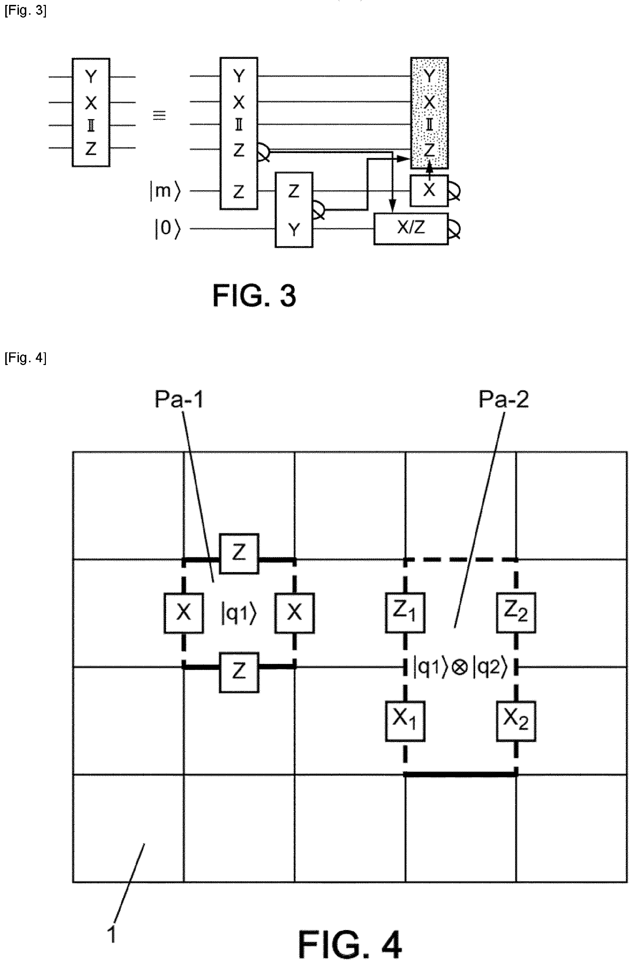

[Fig. 3] is a view of an example of a T gate implementation.
**Fig. 4**
[Fig. 4] is a view of a representation of a one-qubit patch and a two-qubit patch.
**Fig. 5**

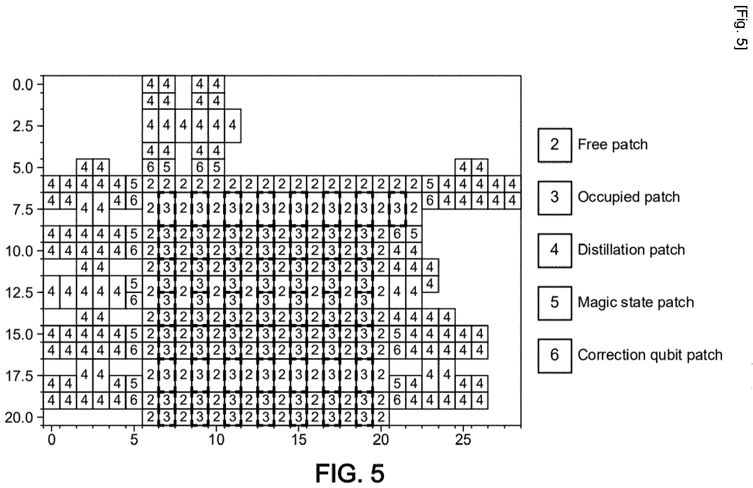

[Fig. 5] is a view of a resulting layout.
**Fig. 6**

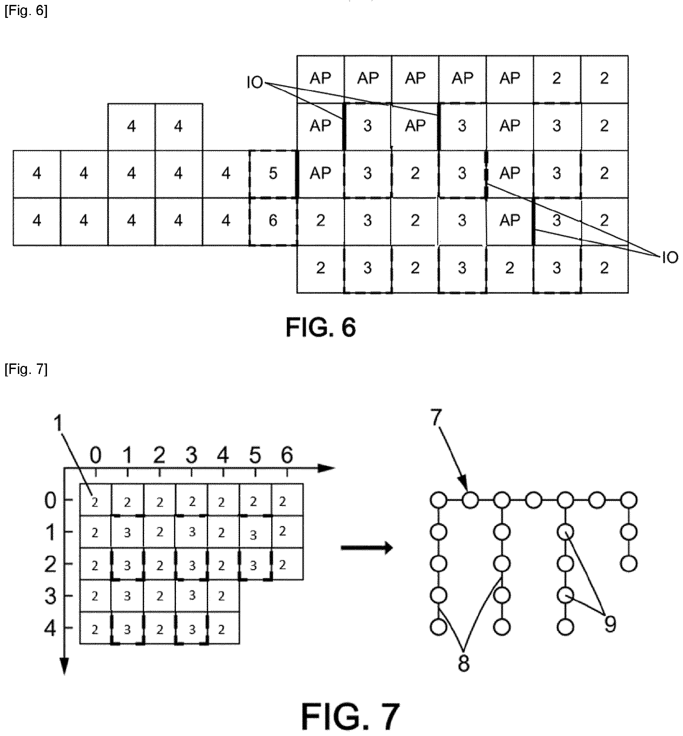

[Fig. 6] is a view of an implementation of a joint measurement.
**Fig. 7**
[Fig. 7] is a view of a conversion of free tiles layout of figure 5 into a tree.
**Fig. 8**

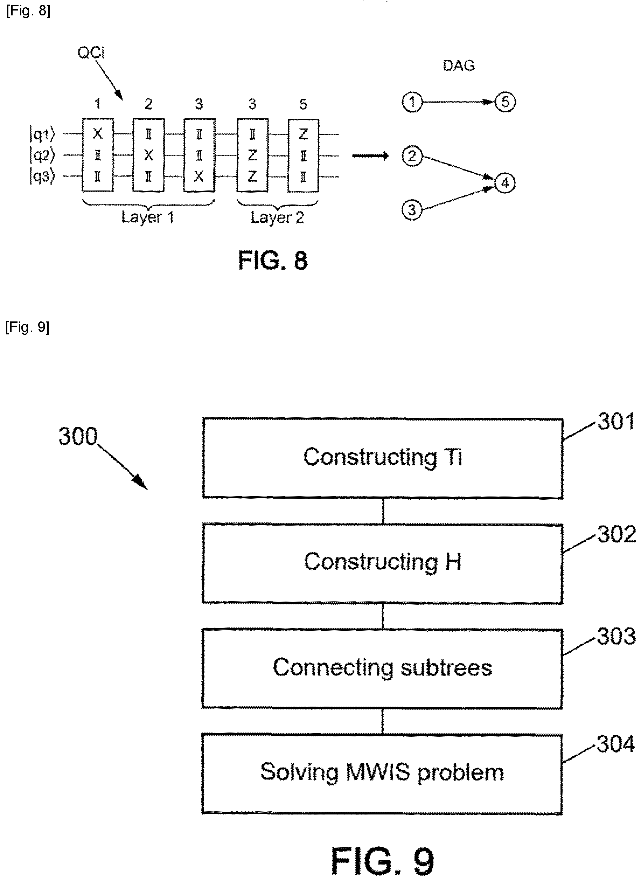

[Fig. 8] is view of an example of a directed acyclic graph generated by the method of figure 1.
**Fig. 9**
[Fig. 9] is a flowchart of a count strategy method of figure 1.

## Description of Embodiments

The present method, referenced 300, as will be detailed later, is shown here applied to implement a quantum circuit Qci with as few time steps as possible, i.e., with a high speed process, the number of steps that are required to implement the circuit QCi giving the measure of the process speed.

As can be seen from figure 1, the method 100 comprises a step 101 that prepares the quantum circuit QCi as a sequence of Clifford and T gates (or Pauli $\pi/4$ rotation). Preferably, given that the Clifford gates can commute to the end of the circuit, a resulting circuit is of the form of a sequence of a plurality of T gates followed by some Pauli measurements of the qubits. In figure 2, the rotations 2 are indicated by layers 1, 2 and 3 while the Pauli joint measurements are indicated by the hatched area.

The method also comprises a step 102 of implementing the T gates, this step being the costliest step of the method. The step 102 consists in performing a series of joint measurements JM, consuming one magic state, or ancilla, as seen from on figure 3, wherein the arrows show that the result of the measurement is used to process a result of the next measurement and the dotted area is a regular Pauli gate. The method can also comprise a step of distillation to produce said magic state. As known, a magic state reads: $|m\rangle = |0\rangle + e^{i\pi/4}|1\rangle$.

Details now are given about how to perform the joint measurements.

To do so, the method 100 further comprises encoding the surface code thanks to a plurality of patches Pa. As seen from figures 4 and 5, a board 1 is partitioned into a grid of tiles. The tiles are used to host said patches, each of which tiles being a representation of a qubit. The patches can be either one-qubit or two-qubit patches.

A one-qubit patch Pa-1 represents one qubit and is delimited by four edges, each edge being coupled to a Pauli operator. On figure 4, the two dashed edges stand for X operators and the two solid edges stand for Z operators. A two-qubit patch Pa-2 represents two qubits. The two-qubit patch comprises six edges. On figure 4, the three dashed lines stand for X operators and the three solid edges stand for Z operators.

As shown in figure 5, a resulting layout comprises occupied patches 2, free patches 3, distillation patches 4, magic state patches 5 and correction qubit patches 6. Such layout is known from document "A game of surface codes" (2019) by D. Litinsky.

As can be seen from figure 6, the joint measurement is implemented by initializing an ancilla patch 5 on free tiles 3 that hits every operator involved in the measurement. On this figure, the Pauli operators that are involved are referenced to as IO (for involved operators) and the ancilla patch is referenced to as AP. Regarding the process speed measure, the joint measurement costs one time step.

The method 100 comprises of converting the free tiles layout into a tree 7. As can be seen from figure 7, the tree 7 comprises rods 8 corresponding to the free tiles 3 and nodes 9 corresponding to the information of which gate can be reached. The tree 7 is composed of a plurality of subtrees, some intersecting and some not intersecting. Two subtrees of the graph that do not intersect correspond to two ancillas not intersecting.

The method 100 aims at finding the not intersecting subtrees. Said differently, a subtree spanning all vertices of rotation $R_i$ being noted $\tau(R_j)$, a valid decomposition D reads: $D = \{\tau(R_{i1}),...,\tau(R_{im})|\forall j \neq k, \tau(R_{ij}) \cap \tau(R_{ik}) = \emptyset\}$.

To construct the valid decomposition D, the method 100 comprises a process referred to as count strategy 300.

The count strategy consists in selecting the decomposition D that maximizes the number of qubits involved to increase parallelizing of the computation.

The method 100 comprises a preprocess 103 of generating iteratively a directed acyclic graph (DAG) of the quantum circuit Qci.

Figure 8 shows an example of a quantum circuit QCi with the rotations to implement as a DAG. As can be seen, layer 1 comprises T gates 1, 2 and 3 while layer 2 comprises T gates 4 and 5. A link (arrow) symbolizes that rotations 1 and 5 cannot commute, as well as rotations 2 and 3 with 4.

A front layer FL of a given iteration of the DAG can be expressed as the set of rotations that can be effectively implemented in said given step. And, at each iteration, the effectively implemented rotations are removed from the DAG.

As can be seen from figure 8, the front layer FL, comprises rotations 1, 2, and 3.

From the front layer FL, rotations among 1, 2 and 3 are to be selected by a heuristic, as will be detailed later in relation with processes 200 and 300. If, firstly, rotations 2 and 3 are implemented in one time step, then the front layer comprises only rotations, or nodes, 1 and 4. Then, rotations 1 and 4 can be implemented in one time step, resulting in the remaining front layer FL of figure that comprises node 5 only.

The method 100 also comprises selecting (step 104) in the front layer FL of the DAG a subset of the set of rotations in which the subtrees are arranged not to intersect. In other words, one can iteratively call the processes 200, 300 on the front layer of the DAG. The rotations chosen by the processes 200, 300 are then removed from the DAG, and the method stops when the DAG is empty.

Thus, the method 100 ensures minimizing the number of time steps that are needed to implement one layer or commuting rotations, by selecting the largest possible group of commuting rotations to implement or the largest possible group of qubits involved.

Chronologically speaking, the step 101 of preparing the quantum circuit QCi precedes generating the DAG (step 103) and extracting (step 104) the rotations that can be implemented, layer by layer, from the DAG as long as the DAG is not empty, as explained above. Then, the T gates are implemented (step 102).

We now detail the count strategy method 300.

The graph, noted G, is a set of points V called vertices or nodes, linked by a set E of edges, such that G=(V, E).

A set R comprises a collection of subsets Ri of vertices of the graph G, R = {R1, ..., Rk}, Ri ⊆ V. The count strategy method applies advantageously to the rotations of the front layer FL of the DAG, though the method 300 is not limited to this application.

The count strategy method comprises visiting the graph G so as to obtain a collection of m subsets Ri1 , ..., Rim ∈ R such that for all rotations Ri in this collection, there exists an associated tree Ti connecting the vertices of Ri such that these trees are pairwise disjoints vi,j, Ti ∩ Tj = ∅ and such that the quantity | Ri1| + | Ri2| +...+ | Rim| is maximal. This collection is called count strategy solution.

Preferably, G is a tree.

The count strategy method 300 comprises a first step 301 of constructing a unique minimal tree Ti of the graph G that contains the rotations Ri.

Then, in a second step 302, a new graph H is constructed, whose vertices are the trees Ti. In other words, V(H)={T1,..., Tk}. A weight is associated to each of the vertices of the new graph H. In other words, a weight |Ri| is associated to the tree Ti.

In another step 303, two trees Ti, Tj of the new graph H are connected only if Ti ∩ Tj ≠ ∅. H being an intersection graph of subtrees of a tree, it is a chordal graph.

Then, the method 300 comprises finding a disconnected set of vertices of H, i.e., a set of non intersecting subtrees, with the largest possible weight, that is, finding a solution to a maximal weighted independent set (MWIS).

To do so, since H is chordal, the method 300 comprises a step 304 of applying Frank's algorithm as known from document "Some polynomial algorithms for certain graphs and hypergraphs", by A. Frank et al., to said MWIS problem. Hence, the result of step 304 is the count strategy solution.

The method 300 is not limited to selecting the rotations from the front layer FL of the DAG. Indeed, the method 300 can apply to maximizing a number of nodes used in parallel in a calculating cluster, which ensures minimizing the calculation time.

## Claims

1. Method for implementing a graph (G) comprising a plurality of vertices (V) and links (E) between the vertices, a set (R) being a collection of subsets (Ri) of said a given number of vertices (Rik)comprising:

   - in said set (R), selecting subsets (Ri, Rj), called pre-selected subsets, such that a tree (Ti, Tj) is associated respectively to said subset (Ri, Rj), said associated trees (Ti, Tj) being pairwise disjoint and constructing (301) each tree (Ti);
   - associating a weight to each said tree (Ti);
   - choosing the subset for which the tree (Ti) has the highest weight.

2. Method according to claim 1, wherein the graph is a tree.

3. Method according to claim 1 or 2, comprising constructing a graph (H), whose vertices are said trees (Ti), two vertices (Ti, Tj) of said graph (H) being connected only if they intersect.

4. Method according to the preceding claim, comprising finding a disconnected set of vertices with the largest possible weight.

5. Method according to the preceding claim, wherein finding a disconnected set of vertices with the largest possible weight consists in finding a solution to maximal weighted independent set (MWIS).

6. Method for implementing a quantum circuit comprising a plurality of qubits as well as operators executed on said qubits, said operators comprising a sequence of $\frac{\pi}{4}$ Pauli rotation gates, a surface code layout comprising an arrangement of said quantum circuit on a quantum chip, the arrangement comprising at least a tree with a plurality of subtrees, at each rotation gate corresponding a subtree of the tree, the method comprising:

   - generating iteratively a directed acyclic graph of said quantum circuit, a front layer of the DAG being a set of rotations that can be effectively implemented at each iteration,
   - selecting in said front layer of the DAG a subset, called selected subset, of said set of rotations among subsets, called non intersecting subsets, in which the subtrees are arranged not to intersect by applying the method of implementing a graph according to claims 1 to 5.

7. Method according to claim 6, comprising: removing the selected subset of rotations from the DAG.

8. Method according to claim 6 or 7, comprising: stopping generating the DAG when the front layer is empty.

[Fig. 1]

FIG. 1

[Fig. 2]

FIG. 2

[Fig. 3]

FIG. 3

[Fig. 4]

FIG. 4

[Fig. 5]

FIG. 5

[Fig. 6]

| | | | | | | AP | AP | AP | AP | AP | 2 | 2 |
|---|---|---|---|---|---|---|---|---|---|---|---|---|
| | | 4 | 4 | | | AP | 3 | AP | 3 | AP | 3 | 2 |
| 4 | 4 | 4 | 4 | 4 | 5 | AP | 3 | 2 | 3 | AP | 3 | 2 |
| 4 | 4 | 4 | 4 | 4 | 6 | 2 | 3 | 2 | 3 | AP | 3 | 2 |
| | | | | | | 2 | 3 | 2 | 3 | 2 | 3 | 2 |

IO

IO

## FIG. 6

[Fig. 7]

| | 0 | 1 | 2 | 3 | 4 | 5 | 6 |
|---|---|---|---|---|---|---|---|
| 0 | 2 | 2 | 2 | 2 | 2 | 2 | 2 |
| 1 | 2 | 3 | 2 | 3 | 2 | 3 | 2 |
| 2 | 2 | 3 | 2 | 3 | 2 | 3 | 2 |
| 3 | 2 | 3 | 2 | 3 | 2 | | |
| 4 | 2 | 3 | 2 | 3 | 2 | | |

7

8

9

## FIG. 7

[Fig. 8]

FIG. 8

[Fig. 9]

FIG. 9

Europäisches
Patentamt

European
Patent Office

Office européen
des brevets

## EUROPEAN SEARCH REPORT

Application Number

EP 22 30 5306

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FANG ZHANG ET AL: "Optimizing T gates in Clifford+T circuit as pi/4 rotations around Paulis", ARXIV.ORG, CORNELL UNIVERSITY LIBRARY, 201 OLIN LIBRARY CORNELL UNIVERSITY ITHACA, NY 14853, 29 March 2019 (2019-03-29), XP081159697, * the whole document * | 1-8 | INV. G06N10/20 G06N10/70 |
| X | VLAD GHEORGHIU ET AL: "A quasi-polynomial time heuristic algorithm for synthesizing T-depth optimal circuits", ARXIV.ORG, CORNELL UNIVERSITY LIBRARY, 201 OLIN LIBRARY CORNELL UNIVERSITY ITHACA, NY 14853, 8 January 2021 (2021-01-08), XP081855267, * the whole document * | 1-8 | |
| A | Yunseong Nam ET AL: "Automated optimization of large quantum circuits with continuous parameters", npj Quantum Information, 1 June 2018 (2018-06-01), pages 1-12, XP055544356, London DOI: 10.1038/s41534-018-0072-4 Retrieved from the Internet: URL:https://arxiv.org/pdf/1710.07345.pdf [retrieved on 2019-01-18] * the whole document * | 1-8 | TECHNICAL FIELDS SEARCHED (IPC) G06N |

-/--

The present search report has been drawn up for all claims

| Place of search | Date of completion of the search | Examiner |
|---|---|---|
| The Hague | 29 August 2022 | Moro Pérez, Gonzalo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 22 30 5306

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BRUGIERE TIMOTHEE GOUBAULT DE ET AL: "Reducing the Depth of Linear Reversible Quantum Circuits", IEEE TRANSACTIONS ON QUANTUM ENGINEERING, IEEE, vol. 2, 7 July 2021 (2021-07-07), pages 1-22, XP011874279, DOI: 10.1109/TQE.2021.3091648 [retrieved on 2021-08-25] * the whole document * | 1-8 | |
| A | DANIEL LITINSKI: "A Game of Surface Codes: Large-Scale Quantum Computing with Lattice Surgery", ARXIV.ORG, CORNELL UNIVERSITY LIBRARY, 201 OLIN LIBRARY CORNELL UNIVERSITY ITHACA, NY 14853, 8 August 2018 (2018-08-08), XP081255132, * the whole document * | 1-8 | |
| A | AUSTIN G. FOWLER ET AL: "Surface codes: Towards practical large-scale quantum computation", PHYSICAL REVIEW A (ATOMIC, MOLECULAR, AND OPTICAL PHYSICS), vol. 86, no. 3, 26 October 2012 (2012-10-26), XP055332246, USA ISSN: 1050-2947, DOI: 10.1103/PhysRevA.86.032324 * the whole document * | 1-8 | **TECHNICAL FIELDS SEARCHED (IPC)** |

The present search report has been drawn up for all claims

| Place of search | Date of completion of the search | Examiner |
|---|---|---|
| The Hague | 29 August 2022 | Moro Pérez, Gonzalo |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. LITINSKY.** *A game of surface codes,* 2019
- **A. FRANK.** *Some polynomial algorithms for certain graphs and hypergraphs*